# EUROPÄISCHE PATENTSCHRIFT

(11) **EP 1 606 532 B1**
(45) Veröffentlichungstag und Bekanntmachung des Hinweises auf die Patenterteilung: **13.08.2008**
(21) Anmeldenummer: 04722794.7
(22) Anmeldetag: 24.03.2004
(51) Int. Cl.: F16F 9/02, F16F 9/346, F16F 9/48, F16F 7/09

(54) **PNEUMATISCHE VERZÖGERUNGSVORRINCHTUNG ZUM ABBREMSEN BEWEGLICHER MÖBELTEILE**
PNEUMATIC DECELERATION DEVICE FOR BRAKING DISPLACEABLE PARTS OF FURNITURE
DISPOSITIF DE DECELERATION PNEUMATIQUE SERVANT A REDUIRE LA VITESSE DE PIECES DE MEUBLES MOBILES

(30) Priorität: 26.03.2003 DE 10313659
(43) Veröffentlichungstag der Anmeldung: 21.12.2005
(73) Patentinhaber: Zimmer, Günther Stephan, 77866 Rheinau (DE); Zimmer, Martin Johannes, 77866 Rheinau (DE)
(72) Erfinder: Zimmer, Günther Stephan, 77866 Rheinau (DE); Zimmer, Martin Johannes, 77866 Rheinau (DE)
(74) Vertreter: Thämer, Wolfgang
(86) Internationale Anmeldenummer: PCT/DE2004/000600
(87) Internationale Veröffentlichungsnummer: WO 2004/085871

(56) Entgegenhaltungen:
- EP-A- 1 026 421
- EP-A- 1 260 159
- DE-A- 10 214 596
- US-A- 5 884 734
- US-A1- 2002 104 722

## Beschreibung

Die Erfindung betrifft eine pneumatische Verzögerungsvorrichtung zum Abbremsen beweglicher Möbelteile, die einen Zylinder und einen, in diesem mittels einer durch interne und externe Kräfte belasteten Kolbenstange axial geführten, mit mindestens einem als Rückschlagventil wirkenden Kolbendichtelement ausgestatteten, einen Verdrängungsraum gegen die Umgebung abgrenzenden Kolben umfasst, wobei der Leckagestrom zwischen dem Verdrängungsraum und der Umgebung zumindest hubrichtungsabhängig ist und das oder die Kolbendichtelemente die Zylinderinnenwandung zumindest in der Kolbenendlage im drucklosen Zustand kontaktieren, wobei sich der Querschnitt des Zylinderinnenraumes entlang des Kolbenhubes zumindest bereichsweise stetig zur Endlage hin aufweitet und wobei mindestes ein Kolbendichtelement schlauchförmig ausgebildet ist und im kolbenstangenseitigen Kolbenendbereich dicht anliegt.

Eine derartige Vorrichtung ist als Teil eines Führungssystems aus der DE 102 14 596 bekannt. Allerdings arbeitet die dort beschriebene Zylinderkolbeneinheit im Verzögerungshub nur gegen ein Druckluftpolster.

Ferner ist aus der EP 1 260 159 A2 eine Verzögerungsvorrichtung bekannt, in der die Verzögerungskräfte mittels Über- und Unterdruck erzeugt werden. Die beschriebenen Konstruktionen lassen jedoch nur einen relativ kleinen Unterdruck entstehen. Zudem setzt im Verzögerungshub die auf dem Unterdruck basierende Kraftwirkung nur relativ langsam ein.

Der vorliegenden Erfindung liegt daher die Problemstellung zugrunde, eine pneumatische Verzögerungsvorrichtung zu entwickeln, die trotz eines kleinen Bauraumbedarfs bei hoher Bremskraft einen schnellen Aufbau der Bremswirkung ermöglicht und die bei Erreichen der Endlage ohne Rückprall und/oder harten Anschlag zum Stillstand kommt.

Diese Problemstellung wird mit den Merkmalen des Hauptanspruches gelöst. Dazu teilt der Kolben den Zylinderinnenraum in einen Druck- und einen Unterdruckraum auf. Die Kolbenstange ist im Zylinder abgedichtet geführt. Sie hat einen Durchmesser, der kleiner ist als 35% des maximalen Kolbendurchmessers.

Aufgrund der Verwendung einer Kolbenstange mit relativ kleinem Durchmesser kann die kolbenstangenseitige Kolbenfläche gegenüber den Produkten aus dem Stand der Technik erheblich vergrößert werden, wodurch ohne Bauraumänderung die Verzögerungskraft allein durch die Wirkung des Unterdrucks vergrößert wird. Mit Hilfe der schlauchförmigen Kolbendichtung, die zudem im kolbenstangenseitigen Kolbenendbereich befestigt ist, hat man eine Bremsmanschette, die sich schnell und zuverlässig an der Zylinderinnenwandung anlegt. Dadurch wird die Verzögerungswirkung nochmals verstärkt.

Weitere Einzelheiten der Erfindung ergeben sich aus den Unteransprüchen und der nachfolgenden Beschreibung schematisch dargestellter Ausführungsformen.
- Figur 1:: Verzögerungsvorrichtung im Längsschnitt;
- Figur 2:: Seitenansicht zu Figur 1;
- Figur 3:: Verzögerungsvorrichtung mit Mantelglocke im Längsschnitt;
- Figur 4:: Kolben bei ausgefahrener Kolbenstange im Längsschnitt;
- Figur 5:: einfahrender Kolben zu Figur 4;
- Figur 6:: dimetrisch dargestellte Bremsdichtung;
- Figur 7:: Längsschnitt der Bremsdichtung;
- Figur 8:: Querschnitt der Bremsdichtung;
- Figur 9:: Kraft-Weg-Diagramm.

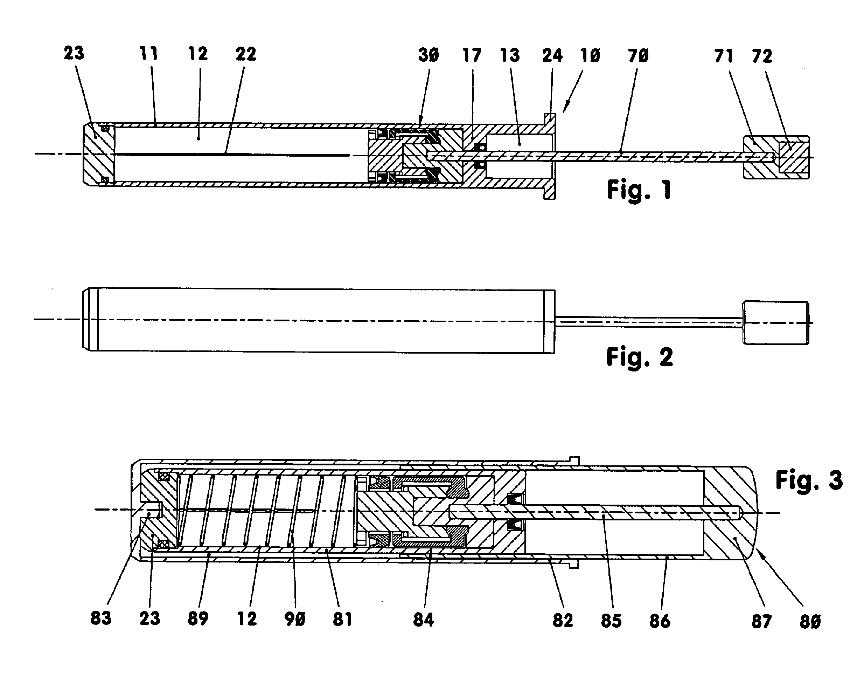

In den Figuren 1 und 2 ist eine Verzögerungsvorrichtung (10) dargestellt, mit der beispielsweise eine zufahrende Schublade im hinteren Bereich ihres Schließweges pneumatisch abgebremst wird. Die Verzögerungsvorrichtung ist eine ZylinderKolbeneinheit, in deren Zylinder (11) ein Kolben (30) geführt ist. Aus dem Zylinder (11) ragt eine Kolbenstange (70) heraus, die an ihrem freien Ende einen Mitnehmerzapfen (71) trägt. Im Mitnehmerzapfen (71) ist beispielsweise ein Stabmagnet (72) oder ein anderes Kupplungsteil eingelassen.

Im erwähnten Einbaubeispiel ist je ein Zylinder (11) an den einander gegenüberliegenden Seitenaußenwandungen einer Schublade befestigt. Die Kolbenstangen (70) stehen z.B. über die Rückwandung der Schublade über. Beim Einfahren der Schublade kontaktieren im hinteren Wegbereich die ausgefahrenen Kolbenstangen (70) über die Mitnehmerzapfen (71) je einen Führungsanschlag oder die Schrankrückwand. Über die nun zwangsweise einfahrenden Kolbenstangen (70) werden in den Verzögerungsvorrichtungen (10) die Schublade bis zum Erreichen der Schubladenendlage abgebremst. Die Stabmagnete (72) haften an den Anschlägen bzw. an einer entsprechend ausgestatteten Rückwand. Beim Öffnen der Schublade bleibt die Magnethaftung bis zum vollständigen Ausziehen der Kolbenstange (70) erhalten. Der Zylinder dieser Verzögerungsvorrichtung (10) hat in der Regel einen Durchmesser der im Bereich zwischen 8 und 15 Millimeter liegt.

Figur 3 zeigt eine Verzögerungsvorrichtung (80), die beispielsweise als Tür- oder Klappenstopper in Möbeln zum Einsatz kommt. Diese Verzögerungsvorrichtung (80) umfasst im Wesentlichen einen Zylinder (81) einen federbelasteten Kolben (84) und eine Kolbenstange (85). Allerdings sitzt das aus dem Zylinder (81) herausragende Kolbenstangenende in einer Führungsglocke (86). Die Führungsglocke (86) ist mit Spiel außen am Zylinder (81) geführt. Der Zylinder (81) ist mit einem Außenmantel (82) ausgestattet, der wiederum mit Spiel die Führungsglocke (86) zumindest im Bereich des Zylinders (81) ummantelt.

Als Türstopper wird die Verzögerungsvorrichtung (80) über den Außenmantel (82) an einer Möbelkorpuswandung befestigt. Die Korpuswandung ist beispielsweise eine Schrankseiten- oder - zwischenwand, an deren Stirnseite beim Schließen der Tür letztere zur Anlage kommt. Der Einbau des Außenmantels (82) erfolgt so, dass die ausgefahrene Führungsglocke (86) über die Stirnseite der Schrankseiten- oder -zwischenwand übersteht. Die zu schließende Tür kontaktiert mit ihrer Innenwandung im Endbereich der Schließbewegung die Führungsglocke (86) und schiebt diese - nun abgebremst - bis zum vollständigen Schließen der Tür in den Freiraum (89) zwischen dem Außenmantel (82) und dem Zylinder (81).

Beim Öffnen der Tür wird die Führungsglocke (86) aufgrund der im Zylinder (81) eingebauten Rückstellfeder (90) wieder vollständig ausgefahren.

Bei der Verzögerungsvorrichtung (10) nach den Figuren 1 und 2 besteht der Zylinder (11) aus einem weitgehend zylindrischen spritzgegossenen Kunststoffteil aus thermoplastischem Kunststoff, das beidseitig kegelstumpfförmige Ausnehmungen (12, 13) aufweist, die durch einen zentrisch mit einer gestuften Bohrung (18) durchbrochenen Zwischenboden (17) gegeneinander getrennt sind. Der maximale Kolbenhub entspricht z.B. dem ca. Fünffachen des minimalen Durchmessers der größeren, linken Ausnehmung (12).

Diese linke Ausnehmung (12) stellt die nichtzylindrische Zylinderinnenwandung dar. Der Querschnitt der Zylinderinnenwandung vergrößert sich ausgehend vom Zwischenboden (17) hin zum eingesetzten Zylinderboden (23). Die Kegelstumpfsteigung beträgt z.B. 1:140. Je nach Bauausführung kann sie in einem Bereich von 1:50 bis 1:250 liegen. Der Zylinderboden (23) sitzt verklebt, thermisch verschweißt oder eingepresst im Zylinder (11). Zwischen dem Zylinderboden (23) und der Zylinderinnenwandung des Zylinderinnenraumes (12) ist ein Dichtring angeordnet. In der Zylinderinnenwandung befindet sich mindestens eine direkt am Zylinderboden (23) endende Drosselnut (22). Sie verläuft z.B. in Mittenlängsebene und endet wenige Millimeter vor dem ausgefahrenen Kolben (30). Die Nut (22) hat beispielsweise einen v-förmigen, kanalförmigen oder halbrundförmigen Querschnitt, der in die kegelstumpfförmige Zylinderinnenwandung (11) scharfkantig übergeht. Ggf. ändert sich der Querschnitt der Drosselnut (22) entlang seiner Länge bezüglich der Form und/oder der Querschnittsfläche. Für einen schnellen Druckabbau auf den letzten Hubwegmillimetern kann eine zweite, kurze Drosselnut in die Zylinderinnenwandung eingearbeitet werden.

Die rechte Ausnehmung ist eine Parkausnehmung (13) für den Mitnehmerzapfen (71). In diesem Bereich endet der Zylinder (11) in einem flanschförmigen Kragen (24), dessen Durchmesser z.B. 135% des Zylinderaußendurchmessers entspricht. Beidseitig ist der Flanschkragen (24) auf den Zylinderaußendurchmesser abgeflacht, vgl. Figur 2.

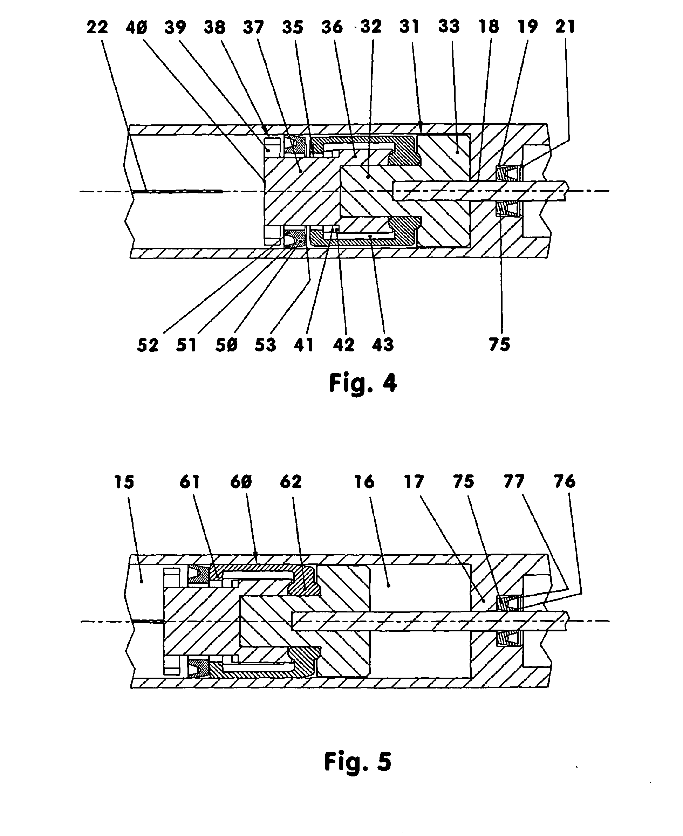

In der mehrfach gestuften Bohrung (18) des Zwischenbodens (17) ist eine Kolbenstangendichtung (75) angeordnet, vgl. auch Figur 4. Die hier verwendete Zweilippendichtung (75) hat eine nach außen (77) und eine nach innen gerichtete Umfangslippe (76). Beide Lippen (76, 77) sind zur Parkausnehmung (13) hin orientiert. Die nach innen gerichtete Umfangslippe (76) umschließt die Kolbenstange (70), während die äußere Umfangslippe (77) in einer Eindrehung (19) der gestuften Bohrung (18) anliegt. Die Eindrehung (19) hat zur axialen Fixierung der Dichtung (75) einen größeren Innendurchmesser als der Übergang (21) zwischen der Bohrung (18) und der Parkausnehmung (13). Zwischen der Dichtung (75) und dem Zylinderinnenraum (15, 16), in dem sich der Kolben (30) bewegt, hat die Bohrung (18) - u.a. zur Abstützung der Dichtung (75) beim Einfahren der Kolbenstange (70) einen so kleinen Durchmesser, dass sich die Kolbenstange (70) gerade noch mit Spiel bewegt.

Der zweiteilige Kolben (30) setzt sich aus einem Kolbenstangenadapter (31) und einem Dichtungslagerteil (35) zusammen.

Auf dem Kolben (30) sind zwei separate - hintereinander angeordnete Kolbendichtelemente (50, 60) gelagert.

Der Kolbenstangenadapter (31) besteht im Wesentlichen aus zwei zylindrischen Abschnitten (32, 33). Der nach Figur 4 rechte Abschnitt (33) bildet den kolbenstangenseitigen Boden des Kolbens (30). Sein Außendurchmesser ist geringfügig kleiner als der kleinste Innendurchmesser der Zylinderinnenwandung (11). Der benachbarte zylindrische Abschnitt (32) dient der Lagerung und der Fixierung des größeren Kolbendichtelements (60). Der Außendurchmesser dieses Abschnittes (32) beträgt ca. 46% des Außendurchmessers des Abschnitts (33).

Auf den Abschnitt (32) ist das Dichtungslagerteil (35) mittels seiner stirnseitigen Sacklochbohrung aufgesteckt. Die Verbindung beider Teile (31, 35) erfolgt hier z.B. durch Kraftschluss mittels eines Querpresssitzes. Ggf. werden die Teile (31, 35) auch verklebt. Die Außenkontur des Dichtungslagerteils (35) umfasst drei beispielsweise zylindrische Abschnitte (36-38). Der erste Abschnitt (36) umgibt radial den Abschnitt (32) des Kolbenstangenadapters (31). Sein Außendurchmesser beträgt z.B. ca. 73% des kleinsten Durchmessers der Zylinderinnenwandung des Zylinderinnenraumes (12). Der zweite, mittlere Abschnitt (37) ist eine Taille, auf der u.a. das Kolbendichtelement (50) gelagert ist. Sein Außendurchmesser entspricht beispielsweise ca. 60% des kleinsten Durchmessers der Zylinderinnenwandung. Der dritte Abschnitt (38) ist der Kolbenbodenkragen. Letzterer hat einen Außendurchmesser, der geringfügig kleiner ist als der kleinste Durchmesser der Zylinderinnenwandung des Zylinderinnenraumes (12). Der Kolbenbodenkragen (38) weist mindestens eine Kerbe (39) oder eine Bohrung auf, die die kolbenbodenseitige Stirnseite (40) des Kolbens (30) mit dem die Taille (37) umgebenden Raum (43) verbindet.

An der Übergangsstelle zwischen dem Abschnitt (37) und dem Abschnitt (36) befindet sich in der axialen Bundfläche (41) mindestens eine z.B. radial verlaufende Kerbe (42).

Das Dichtungslagerteil (35) und der Kolbenstangenadapter (31) sind z.B. durch Spritzgießen aus einem Thermoplast hergestellt. Hierbei wird der Kolbenstangenadapter (31) auf das Ende der metallischen Kolbenstange (70) aufgespritzt. Zur Verbesserung des Sitzes des Kolbenstangenadapters (31) auf der Kolbenstange (70) weist diese im Endbereich z.B. eine Abflachung, eine Kerbe oder eine vergleichbare Kaltverformung auf. Der Durchmesser der Kolbenstange (70) entspricht beispielsweise 17% des kleinsten Innendurchmessers der Zylinderinnenwandung des Zylinderinnenraumes (12). Je nach Bauform kann der Durchmesserbereich zwischen 15 und 35% liegen.

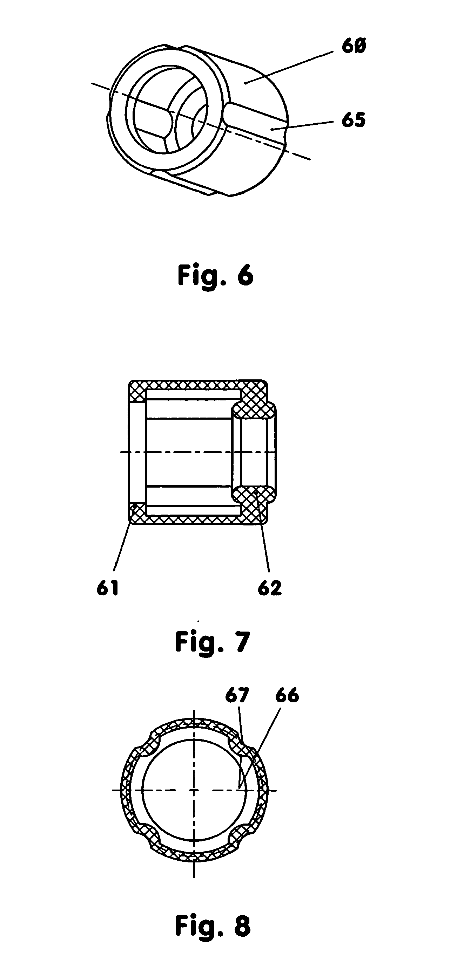

Zwischen dem Kolbenstangenadapter (31) und dem Dichtungslagerteil (35) ist das schlauchförmige Kolbendichtelement (60), vgl. Figuren 6-8, fest und dicht sitzend befestigt. Das Kolbendichtelement (60), das die Aufgabe einer Bremsmanschette hat, besteht aus einem elastischen, gummiartigen Schlauch, dessen Länge größer ist als die Hälfte des maximalen Außendurchmessers. Hier im Ausführungsbeispiel ist die Länge sogar größer als der maximale Durchmesser. Der Schlauch ist z.B. an beiden Enden radial zur Ausgestaltung je eines Innenkragens (61, 62) eingezogen. Der nach Figur 7 linke Innenkragen (61) hat einen Innendurchmesser, der bei unbelasteter Bremsmanschette (60) mindestens um 10% größer ist als der Außendurchmesser der Taille (37). Dieser Innenkragen (61) berührt in keinem Betriebszustand die Taille (37). Der nach Figur 7 rechte Innenkragen (62) ist unter einer Vergrößerung des Querschnittes axial beidseitig verstärkt. Er (62) ist im Bereich dieser Verstärkungen zwischen dem Kolbenstangenadapter (31) und dem Dichtungslagerteil (35) dicht eingeklemmt. In den axialen Kontaktstellen zwischen den Teilen (31, 35) und dem Innenkragen (62) sind in den Teilen (31, 35) zur Verbesserung der Dicht- und Fixierwirkung entsprechende axiale Eindrehungen vorhanden. Der Innendurchmesser des Innenkragens (62) entspricht dem Außendurchmesser des Abschnitts (32).

Alternativ kann die Bremsmanschette (60) zumindest im Bereich des kolbenstangenseitigen Endes des Kolbens (30) ohne einen Innenkragen direkt auf der Außenkontur des Kolbens (30) gasdicht angeordnet sein.

Im montierten Zustand überragt die Bremsmanschette (60) den Abschnitt (36) des Kolbens (30). Hierbei liegt die Bremsmanschette (60) nur beispielhaft über mindestens drei, im Ausführungsbeispiel über vier Längssicken (65) auf. Die Längssicken (65) haben dazu - im Querschnitt gesehen - nach innen hin Längserhebungen (66) und außen radial nach innen vertiefte Längsnuten (67), vgl. Figuren 6 und 8. Anstelle der Längssicken (65) kann zumindest die Außenkontur ganz oder bereichsweise genoppt oder in vergleichbarer Weise strukturiert sein.

Zwischen der äußeren Stirnseite des linken Innenkragens (61) und dem Kolbenbodenkragen (38) ist das Kolbendichtelement (50) angeordnet. Es ist eine Doppellippendichtung, deren umlaufende Dichtlippen (51, 52) zum Zylinderboden (23) hin orientiert sind. Die äußere Dichtlippe (51) ist so dimensioniert, dass sie über mindestens 90% des vorderen Kolbenverdichtungshubs - also in dem Hubbereich, der nicht an den Zylinderboden (23) heranreicht - an der Zylinderinnenwandung des Zylinderinnenraumes (12) anliegt. Die innere Dichtlippe (52) kontaktiert die Taille (37) nicht.

Auf der den Dichtlippen (51, 52) abgewandten Stirnseite der Dichtung (50) ist ein ca. mittig umlaufender Steg (53) angeformt. Er kontaktiert - eine schnelle Dichtwirkung fördernd - beim Arbeitshub die benachbarte Bremsmanschette (60). Ggf. können die Dichtungen (50, 60) an dieser Stelle miteinander einteilig verbunden sein.

Der Kolben (84) der Verzögerungsvorrichtung (80) hat prinzipiell einen vergleichbaren Aufbau wie der Kolben (30) der Verzögerungsvorrichtung (10). Allerdings hat er im Ausführungsbeispiel nach Figur 3 einen kürzeren Hub. Er beträgt hier z.B. nur etwa das 2,6-fache des kleinsten Durchmessers der Zylinderinnenwandung des Zylinderinnenraumes (12). Auch befindet sich zwischen dem Zylinderboden (23) und der Stirnseite des Kolbenbodens die Rückholfeder (90).

Da beim Schließen der Möbeltür auf den ausgefahrenen Teil der Verzögerungsvorrichtung (80) Querkräfte wirken, ist die Kolbenstange (85) mit der Führungsglocke (86) umgeben. Letztere stützt sich am Außenmantel (82) und der äußeren Wandung des Zylinders (81) ab. Der Außenmantel (82) ist dazu z.B. um ca. 14% länger als die äußere Zylinderwandung. Sein Boden ist über einen Zapfen (83) in den Zylinderboden (23) eingesteckt. An seinem anderen Ende endet er in einem schmalen Flansch, der ggf. als Einbauanschlag dient.

Die Führungsglocke (86) ist im Wesentlichen ein rohrförmiger Körper, der an seinem über den Außenmantel (82) überstehenden Ende in eine zylindrische Kappe (87) übergeht. Letztere hat außen eine ballige Stirnseite in Form einer Kugelkalotte. Der Radius der Kalotte entspricht z.B. ca. dem Eineinhalbfachen des Außendurchmessers der Führungsglocke (86). Um beim Einfahren der Führungsglocke (86) die Bremswirkung durch das Verdrängen der Luft im Spaltraum (89) zwischen dem Zylinder (81) und dem Außenmantel (82) nicht unnötig zu vergrößern, ist der Spaltraum (89) um mindestens 14% länger als der Kolbenhub.

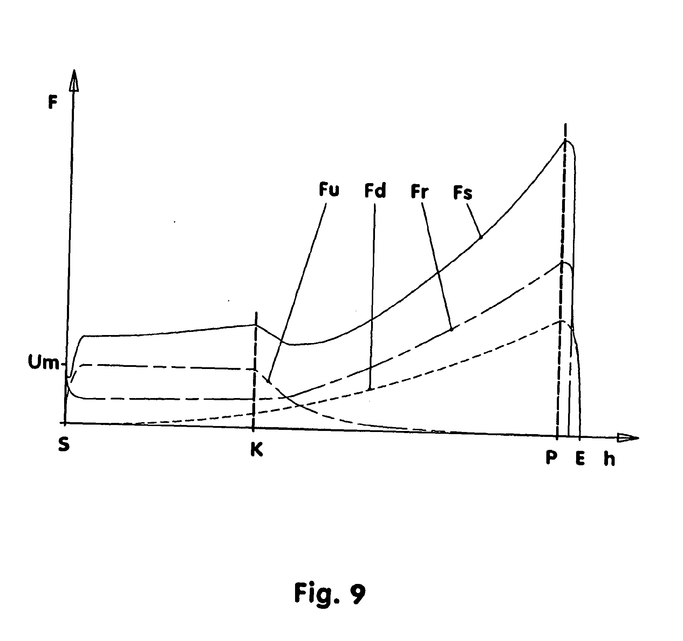

Figur 9 zeigt ein Diagramm, in dem Kräfte (F) über dem Kolbenhubweg (h) für die in den Figuren 1, 4 und 5 dargestellten Varianten aufgetragen sind. Der auf der Abszisse aufgetragene Kolbenhubweg beginnt mit dem Startpunkt (S) und endet bei Erreichen des maximalen Kolbenhubs im Endpunkt (E). In der Zylinder-Kolbeneinheit treten mindestens druckabhängige Kräfte (Fd), unterdruckabhängige Kräfte (Fu) und durch Reibung verursachte Kräfte (Fr) auf. Die Superposition dieser Kräfte wird mit "Fs" bezeichnet.

Wird nun eine Verzögerungsvorrichtung (10) im Arbeitshub belastet, vgl. auch Figur 5, so baut sich vor dem Kolben (30) im Druckraum (15) kontinuierlich ein Überdruck auf. Dieser Überdruck steigt bis zu einem Entlastungspunkt (P) des Kolbenhubs an. Am Entlastungspunkt (P) löst sich die äußere Dichtlippe (51) von der Zylinderinnenwandung ab. An diesem Punkt bzw. in der näheren Umgebung dieses Punktes ist der Innendurchmesser der Zylinderinnenwandung aufgrund der nichtzylindrischen Innenwandungsausführung so groß, dass die Dichtfunktion der Lippe (51) sicher nicht mehr gewährleistet ist. Die verdichtete Luft strömt zwischen der Bremsmanschette (60) und der Zylinderinnenwandung in den Unterdruckraum (16). Dabei benutzt die Luft zunächst die Längssicken (65), vgl. Figur 6. Nahezu zeitgleich entspannt sich durch das Abströmen der im Raum (43) gestauten Luft die Bremsmanschette (60). Ihre Außenkontur löst sich, primär aufgrund der Rückfederwirkung des elastischen Manschettenwerkstoffs, - noch vor Erreichen der Kolbenendlage - nahezu vollständig von der Zylinderinnenwandung des Zylinderinnenraumes (12), vgl. Figur 4. Wenigstens die Reibkraft (Fr) im Kolbenbereich fällt somit auf fast Null zurück.

Mit dem Beginn des Arbeitshubs baut sich sehr schnell im Unterdruckraum (16) ein maximaler Unterdruck (Um) auf. Die Schnelligkeit des Unterdruckaufbaus ergibt sich aus dem geringen Restluftvolumen im Unterdruckraum (16). Bei ausgefahrenem Kolben (30) sind es nur wenige Kubikmillimeter. Der entstehende Unterdruck und der sich im Druckraum (15) aufbauende Überdruck saugen bzw. pressen die Bremsmanschette (60) gegen die Zylinderinnenwandung, vgl. Figur 5. Ab dem Punkt (K) auf der Diagrammabszisse beginnt die in der Zylinderinnenwandung eingelassene Drosselnut (22), vgl. Figur 1. Von diesem Punkt an strömt Luft aus dem Druckraum (15) an der Lippendichtung (50) vorbei über die Längssicken (65) in den Unterdruckraum (16). Daher fällt die Kurve (Fu) ab dem Punkt (K) allmählich auf Null ab.

Die primär durch die Reibung der Bremsmanschette verursachte Reibkraft (Fr) fällt beim Einfahren des Kolbens (30) zunächst durch den Übergang von der Haftreibung auf die Gleitreibung ab. Der unterste Punkt der Kurve (Fr) - kurz nach dem Start - wird durch den hier schon voll anliegenden Unterdruck des Unterdruckraums (16) erreicht. Nach und nach steigt die Reibkraft mit zunehmendem Überdruck im Druckraum (15) bis in den Bereich des Schnittpunktes der Kurven (Fu) und (Fd) an. Ab dort steigt die reibungsverursachte Kraft (Fr) nahezu proportional zum Druckanstieg in der Druckraum (15) an. Nach dem Punkt (P) fällt die Reibkraft - wie schon beschrieben - rapide ab.

### Bezugszeichenliste:

- 10: Verzögerungsvorrichtung mit Mitnehmerzapfen
- 11: Zylinder
- 12: Zylinderinnenraum, Ausnehmung, links;
- 13: Ausnehmung, rechts; Parkausnehmung

- 15: Druckraum, Zylinderinnenraum
- 16: Unterdruckraum, Zylinderinnenraum
- 17: Zwischenboden
- 18: Bohrung, gestuft
- 19: Eindrehung
- 21: Übergang
- 22: Drosselnut
- 23: Zylinderboden
- 24: Flanschkragen

- 30: Kolben, zweiteilig
- 31: Kolbenstangenadapter
- 32: Abschnitt, links
- 33: Abschnitt, rechts

- 35: Dichtungslagerteil
- 36: Abschnitt, erster, rechts
- 37: Abschnitt, zweiter, Mitte; Taille
- 38: Abschnitt, dritter, links; Kolbenbodenkragen
- 39: Kerbe, axial
- 40: Stirnfläche
- 41: Bundfläche
- 42: Kerbe, radial
- 43: Zylinderraum (um Taille)

- 50: Kolbendichtelement, Zweilippendichtung
- 51: Dichtlippen, außen
- 52: Dichtlippen, innen, ohne Anlage
- 53: Rückensteg

- 60: Bremsmanschette, Kolbendichtelement, schlauchförmig
- 61: Innenkragen, links
- 62: Innenkragen mit Verstärkung, rechts
- 65: Längssicken
- 66: Längserhebungen
- 67: Längsnuten

- 70: Kolbenstange
- 71: Mitnehmerzapfen
- 72: Stabmagnet

- 75: Kolbenstangendichtung, Zweilippendichtung
- 76: Umfangslippe, innen
- 77: Umfangslippe, außen

- 80: Verzögerungsvorrichtung mit Außenglocke
- 81: Zylinder
- 82: Außenmantel
- 83: Zapfen
- 84: Kolben

- 85: Kolbenstange
- 86: Führungsglocke
- 87: Kappe

- 89: Spaltraum, Freiraum
- 90: Rückstellfeder

- E: Hubende
- F: Kraft
- Fd: Druckkraft
- Fr: Reibkraft
- Fs: Kraftsuperposition
- Fu: Unterdruckkraft
- h: Kolbenhubweg
- K: Beginn der Drosselnut (22)
- P: Entlastungspunkt
- S: Hubstartpunkt
- Um: max. Unterdruck

## Patentansprüche

1. Pneumatische Verzögerungsvorrichtung zum Abbremsen beweglicher Möbelteile, die einen Zylinder (11, 81) und einen, in diesem mittels einer durch interne und externe Kräfte belasteten Kolbenstange (70, 85) axial geführten, mit mindestens einem als Rückschlagventil wirkenden Kolbendichtelement (50) ausgestatteten, einen Zylinderinnenraum (12) gegen die Umgebung abgrenzenden Kolben (30) umfasst,
- wobei der Leckagestrom zwischen dem Zylinderinnenraum (12) und der Umgebung zumindest hubrichtungsabhängig ist und das oder die Kolbendichtelemente (50, 60) die Zylinderinnenwandung zumindest in der Kolbenendlage im drucklosen Zustand kontaktieren,
- wobei sich der Querschnitt des Zylinderinnenraumes (12) entlang des Kolbenhubes zumindest bereichsweise stetig zur Endlage hin aufweitet und
- wobei mindestes ein Kolbendichtelement (60) schlauchförmig ausgebildet ist und im kolbenstangenseitigen Kolbenendbereich (33) dicht anliegt,
**dadurch gekennzeichnet,**
- **dass** der Kolben (30, 84) den Zylinderinnenraum (12) in einen Druck- (15) und einen Unterdruckraum (16) aufteilt,
- **dass** die Kolbenstange (70, 85) im Zylinder (11, 81) abgedichtet geführt ist und
- **dass** die Kolbenstange (70, 85) einen Durchmesser hat, der kleiner ist als 35% des maximalen Kolbendurchmessers.

2. Verzögerungsvorrichtung nach Anspruch 1, **dadurch gekennzeichnet, dass** der die Zylinderinnenwandung des Zylinderinnenraumes (12) kontaktierende Bereich des Kolbendichtelements (60) länger ist als die Hälfte seines maximalen Außendurchmessers.

3. Verzögerungsvorrichtung nach Anspruch 1, **dadurch gekennzeichnet, dass** die Durchmesser der Räume (15, 16) maximal um 5% differieren.

4. Verzögerungsvorrichtung nach Anspruch 1, **dadurch gekennzeichnet, dass** der Druckraum (15) und der Unterdruckraum (16) über eine Drosselnut (22) verbunden sind, sobald das vorderste Dichtelement (50) des Kolbens (30, 83) die Drosselnut (22) überfahren hat.

5. Verzögerungsvorrichtung nach Anspruch 1, **dadurch gekennzeichnet, dass** zumindest in der die Zylinderinnenwandung des Zylinderinnenraumes (12) kontaktierenden Oberfläche das oder die Kolbendichtelemente (50, 60) grundwerkstoffsfremde Werkstoffe chemisch gebunden oder physikalisch eingelagert sind.

6. Verzögerungsvorrichtung nach Anspruch 5, **dadurch gekennzeichnet, dass** die grundwerkstoffsfremden Werkstoffe Halogene sind.

7. Verzögerungsvorrichtung nach Anspruch 1, **dadurch gekennzeichnet, dass** der Druckraum (15) in der der Kolbenstange (70, 85) abgewandten Seite des Zylinders (11, 81) liegt.

8. Verzögerungsvorrichtung nach Anspruch 5, **dadurch gekennzeichnet, dass** die Dichtelemente (50, 60, 75) aus Nitril-Butadien-Kautschuk sind, in dessen gesamter Oberfläche Halogene chemisch gebunden sind.

9. Verzögerungsvorrichtung nach Anspruch 1, **dadurch gekennzeichnet, dass** das Kolbendichtelement (60) auf seinem äußeren Umfang mindestens eine Längsnut (67) aufweist.

## Claims

1. Pneumatic slowing down device to gradually reduce the speed of moving furniture parts, comprised of a cylinder (11, 81) and of an axially guided piston (30) located inside said cylinder, said guidance coming from a piston rod (70, 85) subjected to internal and external forces, said piston being fitted with at least one piston seal element (50) that works as a flap valve, and delineating an inner cylinder space (12) against the surrounding space,
- where the leakage current between said inner cylinder space (12) and said surrounding space at least depends on travel direction, and where the piston seal element(s) (50, 60) is (are) in contact with the inner wall of said cylinder without exerting pressure on said wall, at least when said rod is at travel end,
- where the cross-section of said inner cylinder space (12) grows constantly along rod travel length, at least in some areas, the closer said rod gets to its end position, and
- where at least one piston seal element (60) is a hose and fits closely to the bottom part of said piston (33) on the piston rod side,
wherein
- said piston (30, 84) divides said inner cylinder space (12) into a pressure chamber (15) and a low pressure chamber (16),
- said piston rod (70, 85) is guided sealed inside said cylinder (11, 81) and
- the diameter of said piston rod (70, 85) is less than 35% of piston maximum diameter.

2. Pneumatic slowing down device of claim 1, wherein the contact area of said piston seal element (60) with the inner wall of said inner cylinder space (12) is longer than half of its maximum outer diameter.

3. Pneumatic slowing down device of claim 1, wherein chamber diameters (15, 16) differ by a maximum of 5%.

4. Pneumatic slowing down device of claim 1, wherein the pressure chamber (15) and the low pressure chamber (16) are linked by a throttle groove (22) as soon as the front seal element (50) of said piston (30, 83) has crossed said throttle groove (22).

5. Pneumatic slowing down device of claim 1, wherein materials differing from the parent materials of said piston seal element(s) (50, 60) are chemically bound with or physically integrated into at least the contact surface with the inner wall of said inner cylinder space (12).

6. Pneumatic slowing down device of claim 5, wherein the materials differing from the parent materials are halogens.

7. Pneumatic slowing down device of claim 1, wherein the pressure chamber (15) is located on the cylinder side (11, 81) opposite to said piston rod (70, 85).

8. Pneumatic slowing down device of claim 5, wherein said piston seal elements (50, 60, 75) are made of butadien nitrile rubber, halogens being chemically bound over the whole rubber surface.

9. Pneumatic slowing down device of claim 1, wherein said piston seal element (60) has at least one longitudinal slot (67) on its outside diameter.

## Revendications

1. Dispositif retardateur pneumatique pour le ralentissement de pièces mobiles d'ameublement qui comprend un vérin (11, 81) et un piston (30) à guidage axial situé à l'intérieur de celui-ci, ledit guidage se faisant au moyen d'une tige de piston (70, 85) soumise à des forces internes et externes, ledit piston étant muni d'au moins un élément d'étanchéité du piston (50) qui fait office de clapet anti-retour et délimitant un espace intérieur du vérin (12) par rapport à l'environnement,
- où le courant de fuite entre l'espace intérieur du vérin (12) et l'environnement dépend au moins de la direction de la course et où le ou les élément(s) d'étanchéité du piston (50, 60) sont en contact avec la paroi intérieure du vérin sans exercer de pression, au moins en fin de course de la tige,
- où la section de l'espace intérieur de vérin (12) croît constamment le long de la course de la tige quand celle-ci se rapproche de sa fin de course, au moins par endroits, et
- où au moins un élément d'étanchéité du piston (60) a la forme d'un flexible et colle à base du piston (33) du côté de la tige de piston,
**caractérisé en ce que**
- le piston (30, 84) divise l'espace intérieur du vérin (12) en une chambre de pression (15) et une chambre de dépression (16),
- la tige de piston (70, 85) est guidé obturé dans le vérin (11, 81) et
- la tige de piston (70, 85) a un diamètre inférieur à 35% du diamètre maximal du piston.

2. Dispositif retardateur pneumatique selon la revendication 1, **caractérisé en ce que** la zone de contact de l'élément d'étanchéité du piston (60) avec la paroi intérieure de l'espace intérieur du vérin (12) est plus longue que la moitié de son diamètre extérieur maximal.

3. Dispositif retardateur pneumatique selon la revendication 1, **caractérisé en ce que** les diamètres des chambres (15, 16) diffèrent au maximum de 5%.

4. Dispositif retardateur pneumatique selon la revendication 1, **caractérisé en ce que** la chambre de pression (15) et la chambre de dépression (16) sont reliées par une rainure d'étranglement (22) dès que l'élément antérieur d'étanchéité (50) du piston (30, 83) a dépassé ladite rainure d'étranglement (22).

5. Dispositif retardateur pneumatique selon la revendication 1, **caractérisé en ce que** des matériaux différents des matériaux de base sont liés chimiquement, au moins à la surface du ou des élément(s) d'étanchéité du piston (50, 60) en contact avec la paroi intérieure de l'espace intérieur du vérin (12) ou intégrés physiquement à au moins celle-ci.

6. Dispositif retardateur pneumatique selon la revendication 5, **caractérisé en ce que** les matériaux différents des matériaux de base sont des halogènes.

7. Dispositif retardateur pneumatique selon la revendication 1, **caractérisé en ce que** la chambre de pression (15) se trouve du côté du vérin (11, 81) situé à l'opposé de la tige du piston (70, 85).

8. Dispositif retardateur pneumatique selon la revendication 5, **caractérisé en ce que** les éléments d'étanchéité (50, 60, 75) sont en caoutchouc nitrile-butadiène dont toute la surface comporte des halogènes liés chimiquement.

9. Dispositif retardateur pneumatique selon la revendication 1, **caractérisé en ce que** l'élément d'étanchéité (60) comporte sur son périmètre extérieur au moins une encoche longitudinale (67).
